# EUROPÄISCHE PATENTSCHRIFT

(11) **EP 3 724 615 B1**
(45) Veröffentlichungstag und Bekanntmachung des Hinweises auf die Patenterteilung: **07.06.2023**
(21) Anmeldenummer: 18803995.2
(22) Anmeldetag: 20.11.2018
(51) Int. Cl.: G01G 19/02, G01G 23/10

(54) **WIM SENSOR MIT ELEKTROAKUSTISCHEN WANDLERN**
WIM SENSOR WITH ELECTROACOUSTIC TRANSDUCERS
CAPTEUR WIM POURVU DE CONVERTISSEURS ÉLECTROACOUSTIQUES

(30) Priorität: 15.12.2017 EP 17207618
(43) Veröffentlichungstag der Anmeldung: 21.10.2020
(73) Patentinhaber: Kistler Holding AG, 8408 Winterthur (CH)
(72) Erfinder: SCHNEIDER, Damian, 8406 Winterthur (CH)
(86) Internationale Anmeldenummer: PCT/EP2018/081848
(87) Internationale Veröffentlichungsnummer: WO 2019/115174

(56) Entgegenhaltungen:
- EP-A1- 2 372 322
- WO-A1-2017/196168

## Beschreibung

### Technisches Gebiet

Die Erfindung betrifft einen WIM Sensor mit elektroakustischen Wandlern zur Ermittlung der Gesamtlast eines Fahrzeugs.

### Stand der Technik

Weigh-in-Motion (WIM) Systeme werden im Transportbereich eingesetzt um die Gesamtlast oder Achslast eines Fahrzeugs zu ermitteln; oder um die Anzahl von Überfahrten von Achsen oder Fahrzeugen über einen Fahrbahnabschnitt zu ermitteln. Ein WIM System besteht hierbei aus mindestens einem WIM Sensor, weiteren externen Sensoren und einem externen Auswerteelement. Unter einem Fahrzeug wird im Folgenden ein Fahrzeug verstanden, oder eine Fahrzeugkombination bestehend aus einem Zugfahrzeug und einem oder mehreren Anhängern. Auf Grund der ermittelten Gesamtlast oder Achslast des Fahrzeugs werden Schritte eingeleitet, die unter anderem geeignet sind eine Beschädigung der Fahrbahn durch Überlast zu vermeiden, nutzungsabhängige Wartungsintervalle der Fahrbahn zu bestimmen, von der Gesamtlast oder der Achslast oder von der Anzahl der Achsen eines Fahrzeugs abhängige Zahlungen zu ermitteln und die Verkehrssicherheit zu erhöhen.

Eine Last ist eine Gewichtskraft, kurz Kraft, die von einem Objekt auf einen Untergrund ausgeübt wird. Dementsprechend ist eine Radlast eine Kraft, die von einem Rad eines Fahrzeugs auf eine Fahrbahn ausgeübt wird; eine Achslast eine Kraft, die von allen Rädern einer Achse eines Fahrzeugs auf eine Fahrbahn ausgeübt wird; und eine Gesamtlast eine Kraft, die von allen Rädern eines Fahrzeugs auf eine Fahrbahn ausgeübt wird.

Im Folgenden werden Rad, Doppelrad und Super-Single Rad unter dem Oberbegriff Rad zusammengefasst. Eine Achse ist eine Achse mit Rädern oder Doppelrädern oder Super-Single Rädern.

WIM Sensoren der WIM Systeme werden in den Fahrbahnbelag eingefügt, wobei eine Fahrspur eines Fahrzeugs in Längsrichtung zur Fahrtrichtung durch mehrere, längs zur Fahrtrichtung nebeneinander in den Fahrbahnbelag eingebrachte WIM Sensoren durchquert ist, wobei je ein WIM Sensor eine Radspur eines Fahrzeugs durchquert. Der WIM Sensor ist im Allgemeinen als entlang einer Längsachse lang ausgestaltetes Profil ausgeführt. Unter einer Radspur wird die Trajektorie eines Rades eines Fahrzeugs auf dem Fahrbahnbelag bei Überfahrt des Fahrzeugs verstanden. Unter einer Fahrspur wird die Gesamtheit aller Radspuren eines Fahrzeugs verstanden. Es kann auch die komplette Fahrspur mit einem langen WIM Sensor durchquert sein oder nur eine Radspur eines Fahrzeugs durch einen WIM Sensor erfasst werden. Oft werden WIM Sensoren in zwei, in Fahrtrichtung beabstandeten Positionen in die Fahrbahn eingebracht, wobei mittels bekannten Abstands der WIM Sensoren die Geschwindigkeit ermittelt wird, die ein Rad zwischen den beabstandeten WIM Sensoren hat. Die WIM Sensoren übermitteln Signale an das externe Auswerteelement.

Zur Ermittlung der Radlast, der Anzahl der überfahrenden Achsen von Fahrzeugen und der Geschwindigkeit des überfahrenden Fahrzeugs reicht dabei ein WIM System bestehend aus mehreren beabstandeten WIM Sensoren und einem externen Auswerteelement aus. Die WIM Sensoren weisen dabei für die Ermittlung der Radlast oder der Achslast typischerweise einen oder mehrere piezoelektrische Kraftsensoren auf.

Die Ermittlung der Last eines Rades erfolgt mittels Messung dynamischer Bodenreaktionskräfte durch mindestens einen Kraftsensor bei Überfahrt eines Rades und der Geschwindigkeit eines Rads. Unter einer Bodenreaktionskraft wird dabei die Kraft verstanden, die einer von einem Rad auf den Boden ausgeübten Kraft entgegenwirkt. Die Geschwindigkeit wird üblicherweise im externen Auswerteelement berechnet.

Um die überfahrenden Räder oder Achsen einem Fahrzeug zuzuordnen, sind üblicherweise zusätzlich zum WIM Sensor zur Erkennung der Präsenz eines Fahrzeugs auf dem Fahrbahnabschnitt weitere externe Sensoren notwendig, wie Beispielsweise in den Fahrbahnbelag eingefügte Induktionsschlaufen in jeder Fahrspur. Es können auch optische Methoden wie Kameras, Lichtschranken, Lichtvorhänge oder auch Radarmessungen oder dergleichen zur Präsenzerkennung eines Fahrzeugs über einem WIM Sensor zum Einsatz kommen. Die Daten dieser weiteren externen Sensoren werden zusammen mit den Daten eines oder mehrerer WIM Sensoren in einem externen Auswerteelement erfasst. Die weiteren externen Sensoren erhöhen den Installationsaufwand, Wartungsaufwand und letztendlich die finanziellen und zeitlichen Kosten für den Aufbau eines WIM Systems.

Eine eindeutige Zuordnung überfahrender Räder oder Achsen zu einem Fahrzeug ist für künftige Anwendungen von WIM Systemen unerlässlich. Diese Anwendungen umfassen nicht abschliessend:
- Direkte Bestrafung von überladenen Fahrzeugen basierend auf einer WIM Messung bei voller Reisegeschwindigkeit.
- Direkte Bestrafung von Fahrzeugen mit überhöhter Geschwindigkeit basierend auf einer WIM Messung bei voller Reisegeschwindigkeit.
- Gewichtsabhängige Mautzahlung basierend auf einer WIM Messung bei voller Reisegeschwindigkeit.
- Gewichtsabhängige Zahlung basierend auf einer WIM Messung in industriellen Anwendungen (Hafen, Minen, etc.).

Für die genannten Punkte werden hohe Anforderungen an WIM Systeme gestellt. So ist in einer Empfehlung der Internationalen Organisation für das gesetzliche Messwesen (OIML) in Norm OIML R-134 für eine Messung eines Fahrzeuggesamtgewichts ohne eingreifen eines Operateurs mittels eines WIM Systems eine Ermittlung der Präsenz eines Fahrzeugs sowie eine Konsistenzprüfung, ob alle Räder eines Fahrzeugs erfasst wurden, empfohlen. Dies dient einer Verbesserung der Genauigkeit der ermittelten Daten, die für eine Nutzung von WIM Systemen in den oben genannten Anwendungen von ausserordentlicher Bedeutung ist.

Des Weiteren spielen auch die Kosten eines WIM Systems eine immer grössere Rolle. Es wird eine möglichst einfache Installation mit wenig Komponenten und, getrieben vom Trend der Vernetzung von mehreren WIM Systemen, eine möglichst autarke Funktion der WIM Sensoren erwartet.

Die WO2017196168A1 zeigt ein optisches Verkehrs-überwachungssystem mit einem optischen Fasersensor, welcher eine optischen Faser und in der optischen Faser angeordnete optische Verspannungssensoren aufweist, welche auf mechanische Spannung empfindlich sind. Der Fasersensor ist in einem Graben in ein festes Füllmaterial eingebettet. Ein das Füllmaterial überfahrendes Fahrzeugrad erzeugt messbare Spannungen im Spannungssensor. Die optische Faser kann eine Beschichtung aufweisen, die als Schicht direkt an die Faser anliegt. Der Fasersensor 20 kann auch auf akustischen Messungen oder Messung von Vibrationen beruhen. Eine Frequenzfilterung des Signals der Spannungssensoren in hochfrequente Anteile und niederfrequente Anteile erlaubt die Ermittlung einer Präsenz eines Fahrzeuges.

Die EP17207618 offenbart einen WIM Sensor mit einem I-förmigen Profil, wobei optische Sensoren beidseits am Profil angeordnet sind und eine Deformation des Profils bei Überfahrt eines Fahrzeuges ermitteln. Es werden weiteren Profilformen offenbart.

Aus US2014309966A ist ein WIM System bekannt; mit einem Verfahren zur Bestimmung der Gesamtlast eines Fahrzeugs während der Fahrt auf einem Fahrbahnabschnitt einer Fahrbahn durch ein WIM System; wobei während der Überfahrt des Fahrzeugs in diesem Fahrbahnabschnitt sowohl Radlasten aller Räder als auch Geschwindigkeit des Fahrzeugs während der gesamten Überfahrt erfasst werden; wobei die Radlasten durch einen oder mehrere WIM Sensoren erfasst werden; wobei die Geschwindigkeit des Fahrzeugs durch zusätzliche Sensoren wie Radar, ein in Fahrtrichtung angeordneter Array von Strahlen, oder mittels Laser Doppler Velocimetry Verfahren erfasst wird; wobei die Zuordnung von erfassten Radlasten zu einem Fahrzeug mit Hilfe einer Vorrichtung zum Ermitteln des Endes des Fahrzeugs, welches einen Fahrbahnabschnitt überfährt, geschieht, wobei genannte Vorrichtung beispielsweise ein Strahlengitter sein kann, das quer zur Fahrbahn errichtet wird, oder Induktionsschlaufen sein können, welche im Fahrbahnbelag eingebaut sind; wobei aus der Summe aller zu einem Fahrzeug gehörenden Radlasten die Gesamtlast des Fahrzeugs bestimmt werden kann. Nachteilig ist hierbei, dass die zur Bestimmung der Gesamtlast eines Fahrzeugs nötige Bestimmung des Endes des Fahrzeugs, das heisst das Ende einer Präsenz des Fahrzeugs über einem WIM Sensor, zusätzliche separate Sensoren in, neben oder über der Fahrbahn erfordert, deren Installation eine längere Sperrung einem Fahrbahnabschnitt und höhere Kosten bezüglich Installation und Wartung des WIM Systems verursachen.

Eine erste Aufgabe der vorliegenden Erfindung liegt in der Ermittlung der Gesamtlast eines Fahrzeugs auf Grund der Signale eines WIM Sensors ohne zusätzliche externe Sensoren und in der damit einhergehenden Reduktion von Kosten und Installationsaufwand für WIM Systeme. Eine weitere Aufgabe ist eine Erhöhung der Genauigkeit des WIM Systems.

### Darstellung der Erfindung

Zumindest eine dieser Aufgaben wird durch die Merkmale des unabhängigen Anspruchs gelöst.

Die Erfindung betrifft einen WIM Sensor zur Ermittlung von Lasten von Fahrzeugen auf einem Fahrbahnabschnitt bei der Überfahrt eines Rades eines Fahrzeugs über den WIM Sensor; welcher WIM Sensor im Fahrbahnabschnitt in der Fahrbahnoberfläche angeordnet ist und mit der Fahrbahnoberfläche eine Ebene bildet; welcher WIM Sensor als ein entlang einer Längsachse lang ausgestaltetes Profil mit mindestens einem Raum ausgeführt ist; in welchem Raum mindestens ein Kraftsensor angeordnet ist; welcher Kraftsensor ein Kraftsensorsignal erzeugt; welches Kraftsensorsignal einer dynamischen Bodenreaktionskraft bei Überfahrt des Rades entspricht, welches Rad eine Kraft auf den Fahrbahnabschnitt ausübt; wobei im Raum mindestens ein elektroakustischer Wandler angeordnet ist; und wobei der elektroakustische Wandler Schallwellen misst und als Wandlersignal bereitstellt.

Unter einem elektroakustischen Wandler wird ein Sensor verstanden, der Schallwellen erfasst.

Ein auf einem Fahrbahnabschnitt fahrendes Fahrzeug erzeugt Geräusche. Diese Geräusche, respektive die ausgehenden Schallwellen, sind unter anderem durch das Abrollen der Räder eines Fahrzeugs auf dem Fahrbahnbelag oder einen Motor eines Fahrzeugs gegeben, wobei sich die Schallwellen nicht nur in der umgebenden Luft, sondern auch im Fahrbahnbelag, ausbreiten. Die charakteristischen, an einer Position im Raum ermittelten Eigenschaften dieser Schallwellen sind dabei unter anderem abhängig von der Entfernung zu der Quelle der Schallwellen und dem Ausbreitungsmedium.

Da Schallwellen an Elementen im Raum reflektiert werden, wird durch das Vorhandensein von Elementen die Ausbreitung der Schallwellen charakteristisch beeinflusst. So ist beispielsweise eine Reflexion von Schallwellen an Bergmassiven bekannt, bei der die Ausbreitung der ausgehenden Schallwellen charakteristisch beeinflusst wird. Im vorliegenden Fall kommt es zu einer Reflexion von Schallwellen an Elementen eines Fahrzeugs, und daher auch am Unterboden eines Fahrzeugs. Diese Elemente eines Fahrzeugs können dadurch als weitere Quellen für Schallwellen verstanden werden, wobei sich diese Schallwellen mit den ursprünglich vorhandenen Schallwellen überlagern. Die reflektierten Schallwellen treffen wiederum auf den Fahrbahnbelag auf.

Die von einem Fahrzeug erzeugten Schallwellen und die an Elementen des Fahrzeugs reflektierten Schallwellen breiten sich daher jeweils im Fahrbahnbelag aus und durchdringen selbstverständlich auch einen im Fahrbahnbelag eingebrachten WIM Sensor. Die Schallwellen breiten sich dementsprechend auch in einem Raum des Profils des WIM Sensors aus.

Aus einer Überlagerung der genannten Schallwellen wird eine Präsenz eines Fahrzeugelements in der Umgebung eines im Fahrbahnbelag eingebrachten elektroakustischen Wandlers durch eine Auswertung der ermittelten Signale des elektroakustischen Wandlers ermittelt.

Durch die bekannten Gesetze der Ausbreitung von Schallwellen kann durch eine Anordnung mit drei oder mehr elektroakustischen Wandlern und eine Auswertung der ermittelten Signale der elektroakustischen Wandler eine Position einer Quelle von Schallwellen zu einem bestimmten Zeitpunkt ermittelt werden.

Durch Kenntnis der Position einer Quelle von Schallwellen zu einem bestimmten Zeitpunkt kann mittels Auswertung der zeitlichen Änderung der Position eine Trajektorie einer Quelle von Schallwellen bestimmt werden, welche Trajektorie eine dynamische Positionsänderung einer Quelle von Schallwellen beschreibt.

Die elektroakustischen Wandler sind in einem Raum im Fahrbahnbelag, im speziellen in einem Raum eines im Fahrbahnbelag eingefügten WIM Sensors, angeordnet.

Ein WIM Sensor mit mindesten einem elektroakustischen Wandler zur Ermittlung einer Präsenz eines Fahrzeugs in der Umgebung eines WIM Sensors ist vorteilhaft gegenüber einem WIM System zur Messung einer Gesamtlast eines Fahrzeugs wie aus US2014309966A bekannt, da weitere separate externe Sensoren neben dem WIM Sensor zur notwendigen Ermittlung einer Präsenz eines Fahrzeugs im Bereich des Sensors zur Zuordnung einzelner ermittelter Radlasten zum Fahrzeug entfallen; wobei durch das Entfallen weiterer separater externer Sensoren Installationskosten, Wartungskosten und Installationsaufwand reduziert werden. Des Weiteren kann die Dauer einer Sperrung der Fahrbahn für die Installation eines WIM Systems auf unter acht Stunden reduziert werden. Ein in den WIM Sensor eingebrachter Mikroprozessor zur Signalverarbeitung ermöglicht des Weiteren einen autarken Einsatz des Sensors und reduziert die Anforderungen an ein externes Auswerteelement.

### Kurze Beschreibung der Zeichnungen

Im Folgenden wird die Erfindung beispielhaft unter Beizug der Figuren näher erklärt. Es zeigen
- Fig. 1: eine schematische Teilansicht eines Fahrbahnabschnittes mit einem Teil eines WIM Systems mit WIM Sensoren und weiteren externen Sensoren zur Ermittlung einer Präsenz eines Fahrzeugs über einem WIM Sensor,
- Fig. 2: eine schematische Teilansicht eines Fahrbahnabschnittes mit einer ersten Ausführungsform eines Teils eines WIM Systems mit WIM Sensoren mit integrierten Sensoren zur Ermittlung einer Präsenz eines Fahrzeugs über einem WIM Sensor,
- Fig. 3: eine schematische Teilansicht einer vorteilhaften Ausführungsform eines WIM Sensors mit integrierten Sensoren zur Ermittlung einer Präsenz eines Fahrzeugs über einem WIM Sensor,
- Fig. 4: eine weitere schematische Teilansicht einer vorteilhaften Ausführungsform eines WIM Sensors mit integrierten Sensoren zur Ermittlung einer Präsenz eines Fahrzeugs über einem WIM Sensor,
- Fig. 5: eine schematische Teilansicht eines Fahrbahnabschnittes mit einer ersten Ausführungsform eines Teils eines WIM Systems mit WIM Sensor mit integrierten Sensoren zur Ermittlung einer Präsenz eines Fahrzeugs über einem WIM Sensor sowie Darstellung einer ermittelten Trajektorie eines Fahrzeugs sowie Geschwindigkeiten an unterschiedlichen Orten der Trajektorie des Fahrzeugs,
- Fig. 6: ein Diagramm zur Veranschaulichung der Signale eines WIM Sensors in vorteilhafter Ausführungsform, wobei einzelne Komponenten des WIM Sensors aus Gründer der Verständlichkeit im Diagramm schematisch dargestellt sind,
- Fig. 7: eine schematische Teilansicht einer weiteren Ausführungsform eines WIM Sensors mit Energieversorgung und integrierten Sensoren zur Ermittlung einer Präsenz eines Fahrzeugs über einem WIM Sensor,
- Fig. 8: eine schematische Teilansicht einer weiteren Ausführungsform eines WIM Sensors mit Signalgenerator und integrierten Sensoren zur Ermittlung einer Präsenz eines Fahrzeugs über einem WIM Sensor.

### Wege zur Ausführung der Erfindung

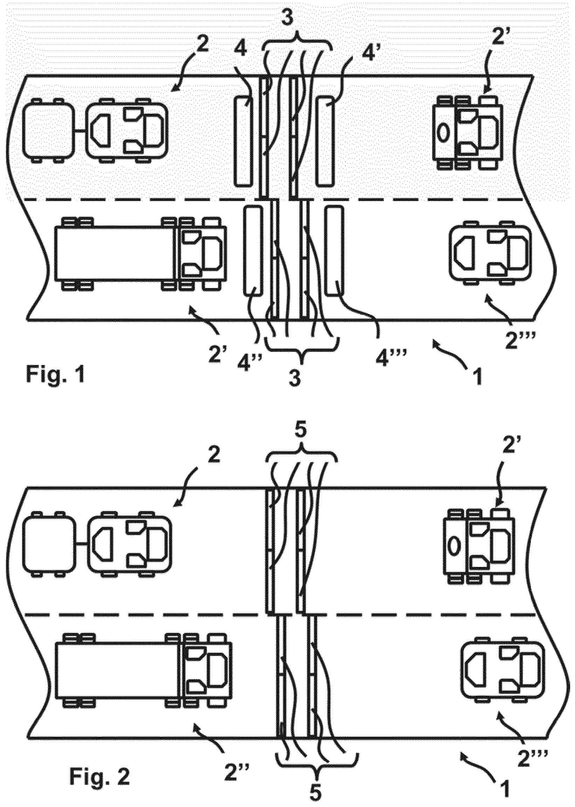

Fig. 1 zeigt einen Fahrbahnabschnitt 1 mit Teilen eines WIM Systems zur Ermittlung der Gesamtlast eines Fahrzeugs 2, 2', 2", 2‴ mittels eines oder mehrerer WIM Sensoren 3 und mehrerer externer Sensoren 4, 4', 4", 4‴ zur Präsenzmessung eines Fahrzeugs 2, 2', 2", 2‴ über einem WIM Sensor nach dem Stand der Technik.

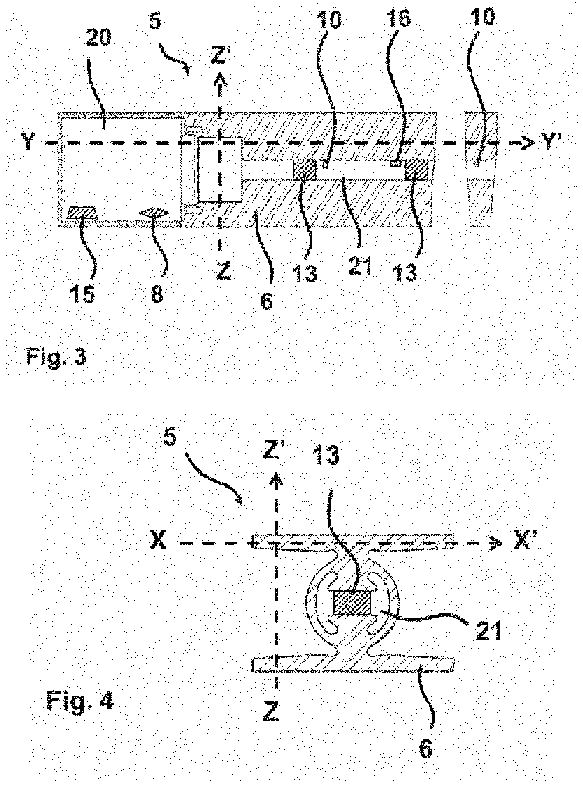

Fig. 2 zeigt einen Fahrbahnabschnitt 1 mit Teilen eines WIM Systems in einer ersten Ausführungsform zur Ermittlung der Gesamtlast eines Fahrzeugs 2, 2', 2", 2‴ mittels mindestens zweier vorteilhafter WIM Sensoren 5, welche in Fahrtrichtung XX' eines Rades beabstandet im Fahrbahnabschnitt angeordnet sind; wobei, wie in Fig. 3 und Fig. 4 gezeigt, der WIM Sensor 5 ein lang ausgestaltetes Profil ist; in welchem Profil ein oder mehrere Räume 20, 21 angeordnet sind; wobei in einem Raum 20, 21 mindestens ein Kraftsensor 13 zur Ermittlung einer Rad- oder Achslast angeordnet ist.

Unter einem Raum 20, 21 wird in einer bevorzugten Ausführungsform ein teilweise oder gänzlich durch das Profil umschlossener Bereich verstanden, der ganz oder teilweise über die Längsachse YY` des Profils 6 vorhanden ist. Ein Raum 20 ist neben oder unter dem in Fig. 4 gezeigtem Profil 6 angeordnet. Des Weiteren kann ein Raum 21 auch an ein Ende bezüglich der Längsachse YY` eines Profils 6 anschliessen. So kann der Raum 21 neben, bezüglich der Fahrtrichtung XX', oder unter, bezüglich der Höhenrichtung ZZ', dem in Fig. 4 gezeigten Profil 6 angeordnet sein. Unter Höhenrichtung ZZ' wird dabei die Richtung senkrecht zur Fahrbahnoberfläche verstanden. Der Raum 21 kann auch, wie in Fig. 3 gezeigt, an ein Ende des Profils 6 anschliessen.

Im Raum 20, 21 sind in bevorzugter Ausführungsform mindestens ein elektroakustischer Wandler 10, welcher ein Wandlersignal 110 erzeugt, und mindestens zwei A/D Wandler 11 angeordnet.

Des Weiteren ist im Raum 20, 21 mindestens ein Kraftsensor 13 angeordnet; wobei der Kraftsensor beim Wirken einer Kraft auf das Profils ein Kraftsensorsignal 100 erzeugt; wobei das Kraftsensorsignal 100 durch den ersten A/D-Wandler 11 in ein digitales Kraftsensorsignal 101 gewandelt und bereitgestellt wird; wobei mindestens ein Wandlersignal 110 mindestens eines elektroakustischen Wandlers 10 durch einen A/D-Wandler 11 gewandelt und bereitgestellt wird und im Folgenden als digitales Wandlersignal 111 bezeichnet wird.

Bereitstellen eines Signals ist im Folgenden so zu verstehen, dass das bereitgestellte Signal für eine weitere Verwendung verfügbar ist. Bereitstellen beinhaltet so auch das Speichern des Signals auf einem elektronischen Speicher und das Laden des Signals aus diesem Speicher. Bereitstellen beinhaltet auch das Darstellen des Signals auf einer Anzeige.

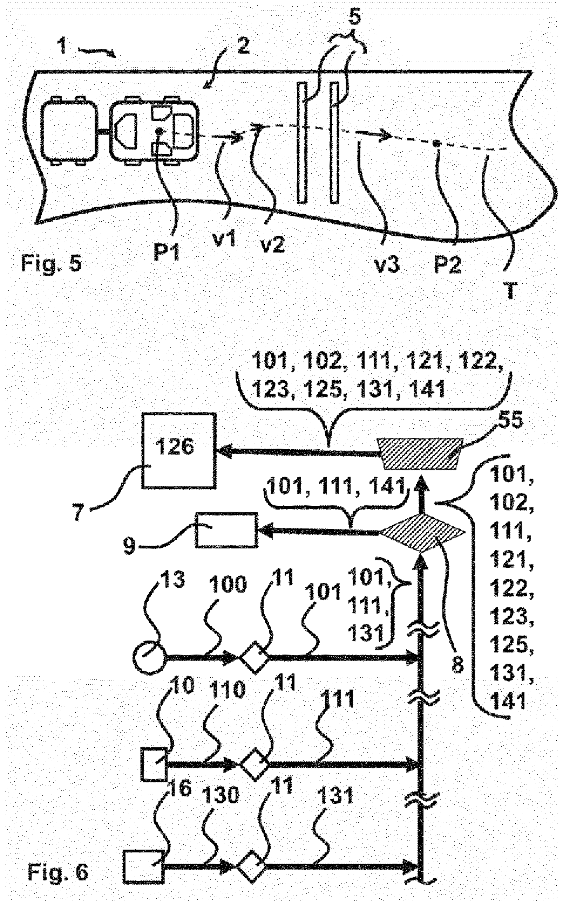

Fig. 6 gibt eine schematische Übersicht über im Folgenden genannte Signale; wobei ein Teil der Komponenten des WIM Systems ebenfalls zum besseren Verständnis gezeigt sind.

In bevorzugter Ausführungsform besteht ein Kraftsensor 13 aus mindestens einem piezoelektrischen Messelement mit Elektroden und mindestens einem Ladungsverstärker; welches piezoelektrische Messelement bei einer Einwirkung einer Kraft eine Ladung generiert; welche Ladung mittels Elektroden an dem Ladungsverstärker verfügbar ist; welcher Ladungsverstärker die Ladung in ein Kraftsensorsignal 100 wandelt und das Kraftsensorsignal 100 bereitstellt; welches Kraftsensorsignal 100 ein elektrisches Signal, bevorzugt eine elektrische Spannung, ist.

Selbstverständlich kann der Fachmann auch eine andere Ausführungsform eines Kraftsensors 13 wählen, wie einen Dehnungsmessstreifen oder ein piezoresistives Messelement oder ein anderes Messelement mit oder ohne elektrischen Verstärker oder ähnlicher elektrischer Schaltung, welches unter Einwirkung einer Kraft ein der Kraft entsprechendes Signal generiert und als Kraftsensorsignal 100 bereitstellt.

Der elektroakustische Wandler 10 hat eine Sensitivität für Schallwellen im hörbaren Bereich von einschliesslich 20 Hz bis 21 kHz, oder im Ultraschallbereich von einschliesslich 21 kHz bis 1 GHz, oder im hörbaren Bereich und im Ultraschallbereich.

Des Weiteren ist im Raum 20, 21 mindestens ein Mikroprozessor 8 und mindestens ein nicht flüchtiges Speicherelement 9 angeordnet.

In bevorzugter Ausführungsform ist mindestens ein digitales Kraftsensorsignal 101 und mindestens ein digitales Wandlersignal 111 im Mikroprozessor 8 verfügbar.

Im Mikroprozessor 511 werden mindestens ein digitales Kraftsensorsignal 101 und mindestens ein digitales Wandlersignal 111 zeitlich synchronisiert erfasst. Unter einer zeitlich synchronen Erfassung mindestens eines digitalen Kraftsensorsignals 101 und einem digitalen elektroakustischen Signal 111 wird eine eindeutige Zuordnung des erfassten digitalen Kraftsensorsignals 101 zu dem zeitgleich gemessenen digitalen elektroakustischen Signal 111 verstanden. Zeitgleich ist ein digitales Kraftsensorsignal 101 zu einem digitalen Wandlersignal 111, wenn das digitale Kraftsensorsignal 101 und das digitale Wandlersignal 111 nach der bekannten digitalen Signalübertragungstechnik mit normalem Aufwand zu einem gleichen Wert eines internen Zeitgebers des Mikroprozessors 8 erfasst werden.

Unter einer zeitlich synchronen Erfassung mindestens zweier digitaler Kraftsensorsignale 101 wird eine eindeutige Zuordnung der beiden zeitgleich gemessenen digitalen Kraftsensorsignale 101 verstanden. Zeitgleich sind zwei digitale Kraftsensorsignale 101, wenn die digitalen Kraftsensorsignale 101 nach der bekannten digitalen Signalübertragungstechnik mit normalem Aufwand zu einem gleichen Wert des internen Zeitgebers des Mikroprozessors 8 erfasst werden. Es versteht sich, dass zwei synchron erfasste digitale Kraftsensorsignale 101 von mindestens zwei Kraftsensoren 13 stammen.

Mindestens ein digitales Wandlersignal 111 wird mittels eines Algorithmus im Mikroprozessor 8 ausgewertet und als Präsenzinformation 121 bereitgestellt. Auf dem nicht flüchtigen Speicherelement 9 ist dabei mindestens ein Algorithmus gespeichert, welcher in den Mikroprozessor 8 geladen wird. Der Algorithmus vergleicht das digitale Wandlersignal 111 mit mindestens einer charakteristischen Signatur für eine Präsenz eines Fahrzeugs 2, 2', 2", 2‴ über dem WIM Sensor 5 und bildet daraus die Präsenzinformation 121. Die charakteristische Signatur ist mindestens eine bekannte und im nicht flüchtigen Speicherelement 9 gespeicherte, vorgängig definierte Signalhöhe in mindestens einem vorgängig definierten Frequenzbereich des digitalen Wandlersignals 111. Die Signalhöhe ist eine definierte Intensität des ermittelten Signals. Die charakteristische Signatur wird in den Mikroprozessor 8 geladen.

Findet der Algorithmus in dem Vergleich zwischen der geladenen charakteristischen Signatur und dem digitalen Wandlersignal 111 eine Übereinstimmung, so ist eine Präsenz eines Fahrzeugs 2, 2' 2" 2‴ über dem WIM Sensor 5 ermittelt und der Algorithmus bildet eine positive Präsenzinformation 121. Ansonsten bildet der Algorithmus eine negative Präsenzinformation 121.

Wie in Fig. 5 dargestellt, wertet der Algorithmus im Mikroprozessor 8 Wandlersignale 111 mindestens dreier beabstandet angeordneter elektroakustischer Wandler 10 aus. Dabei vergleicht der Algorithmus die digitalen Wandlersignale 111 anhand Ihrer Form und bildet aus dem zeitlichen Versatz zweier erkannter Formen zweier digitaler Wandlersignale 111 die zeitliche Differenz der Ankunftszeit der beiden erfassten digitalen Wandlersignale(111). In einem weiteren Schritt bildet der Algorithmus paarweise die zeitliche Differenz in der Ankunftszeit dreier Wandlersignale 111 verschiedener elektroakustischer Wandler 10. Der Algorithmus bildet daraus eine Phaseninformation 125 und stellt diese bereit. Die genaue Position P1, P2 des passierenden Fahrzeugs 2, 2', 2", 2‴ in der Umgebung des WIM Sensors 5 errechnet der Algorithmus aus der Phaseninformation 125. Der Algorithmus bildet aus der Position des Fahrzeugs 2, 2', 2", 2‴ eine Fahrzeugpositionsinformation 122 und stellt diese bereit.

Der Algorithmus erzeugt aus der Fahrzeugpositionsinformation 122 und der zeitlichen Änderung der Fahrzeugpositionsinformation 122 die Trajektorie T des Fahrzeugs 2, 2', 2", 2‴ in der Umgebung des WIM Sensors 5. Die Trajektorie T wird von dem Algorithmus als Fahrzeugtrajektorieninformation 123 bereitgestellt. Die Trajektorie T ist eine von der Zeit abhängige mathematische Bahnkurve in einem dreidimensionalen Koordinatensystem. Dadurch ist die erste Ableitung der Trajektorie nach der Zeit die Geschwindigkeit, in Fig. 5 dargestellt als v1, v2, v3, des Fahrzeugs 2, 2', 2", 2‴ in der Umgebung des WIM Sensors 5. Die zweite Ableitung nach der Zeit der Trajektorie ist die Beschleunigung des Fahrzeugs 2, 2' 2" 2‴ in der Umgebung des WIM Sensors 5.

Die Beschleunigung eines Fahrzeugs 2, 2', 2", 2‴ wirkt als zusätzliche Kraftkomponente auf den Kraftsensor 13 und beeinflusst dadurch das ermittelte digitale Kraftsensorsignal 101. So ist bei einer Abbremsung (negativer Beschleunigung) des Fahrzeugs 2, 2', 2", 2‴ die von den Vorderrädern eines Fahrzeugs 2, 2', 2", 2‴ auf den Fahrbahnbelag ausgeübte Kraft um eine Kraftkomponente erhöht, welche proportional zur negativen Beschleunigung des Fahrzeugs 2, 2', 2", 2‴ und dem Gewicht des Fahrzeugs 2, 2', 2", 2‴ ist, während die von den Hinterrädern des Fahrzeugs 2, 2', 2", 2‴ auf den Fahrbahnbelag ausgeübte Kraft um eine Kraftkomponente proportional zur Beschleunigung und dem Gewicht des Fahrzeugs 2, 2 `, 2", 2‴ vermindert ist.

Ebenso wirkt bei einer Radialbeschleunigung eines Fahrzeugs 2, 2', 2", 2‴, welches sich auf einer gekrümmten Bahnkurve im dreidimensionalen Koordinatensystem bewegt, eine zusätzliche Kraftkomponente auf den Kraftsensor 13 und beeinflusst dadurch das ermittelte digitale Kraftsensorsignal 102. So ist bei einer Linkskurve, welche das Fahrzeug 2, 2', 2", 2‴ fährt, die von den rechten Rädern des Fahrzeugs 2, 2', 2", 2‴ auf den Fahrbahnbelag ausgeübte Kraft erhöht, die von den linken Rädern des Fahrzeugs 2, 2', 2", 2‴ ausgeübte Kraft auf den Fahrbahnbelag vermindert, jeweils um eine Kraftkomponente proportional zur Radialbeschleunigung des Fahrzeugs 2, 2', 2", 2‴ und dem Gewicht des Fahrzeugs 2, 2', 2", 2 ` ` ` .

Der Algorithmus bildet aus der Fahrzeugtrajektorieninformation 123 und den digitalen Kraftsensorsignalen 101 korrigierte digitale Kraftsensorsignale 102 der den WIM Sensor 5 überfahrenden Räder eines Fahrzeugs 2, 2', 2", 2‴. Der Algorithmus berechnet aus der Fahrzeugtrajektorieninformation 123 die Beschleunigung oder Radialbeschleunigung des Fahrzeugs 2, 2', 2", 2‴ an der Position des Kraftsensors 13 und berechnet aus der ermittelten Kraft, welche ein Rad auf den Kraftsensor 13 ausübt, den Anteil der Kraft (Kraftkomponente), der durch die Beschleunigung des Fahrzeugs 2, 2 `, 2", 2‴ gegeben ist, bildet die Differenz dieser Kraftkomponente und dem ermittelten digitalen Kraftsensorsignal 101 und erzeugt daraus das korrigierte digitale Kraftsensorsignal 102. Das korrigierte digitale Kraftsensorsignal 102 ist dadurch unabhängig von der durch die Beschleunigung oder Radialbeschleunigung des Fahrzeugs 2, 2', 2", 2‴ auf den Fahrbahnabschnitt ausgeübten Kraft.

In einer bevorzugten Ausführungsform bildet der Algorithmus das korrigierte digitale Kraftsensorsignal 102 aus der Fahrzeugtrajektorieninformation 123und mindestens einem digitalen Kraftsensorsignal 101 der den WIM Sensor 5 überfahrenden Räder eines Fahrzeugs 2, 2', 2", 2‴ und mindestens einer weiteren Messgrösse; wobei die andere Messgrösse auch, aber nicht ausschliesslich, eine Temperatur sein kann, welche Temperatur durch eine Temperatursonde 16 als Temperatursondensignal 130 ermittelt, durch einen A/D Wandler 11 gewandelt und in digitaler Form als digitales Temperatursondensignal 131 bereitgestellt wird. Der Algorithmus korrigiert das digitale Kraftsensorsignal 101 auf Grund der vorgängig bekannten Temperaturabhängigkeit des Kraftsensors 13, bevor der Algorithmus die oben beschriebene Kraftkomponente, welche proportional zur Radialbeschleunigung oder Beschleunigung des Fahrzeugs 2, 2', 2'', 2‴ und dem Gewicht des Fahrzeugs 2, 2', 2", 2‴ ist, vom digitalen Kraftsensorsignal 101 abzieht und das Ergebnis als korrigiertes digitales Kraftsensorsignal bildet.

In bevorzugter Ausführungsform werden während einer positiven Präsenzinformation 121 von einem Algorithmus im Mikroprozessor 8 oder im externen Auswerteelement 7 alle verfügbaren korrigierten digitalen Kraftsensorsignale 102 dem Fahrzeug 2, 2' 2" 2‴ zugeordnet.

Ein Algorithmus im externen Auswerteelement 7 bestimmt die korrigierte Achslast aller Achsen und die korrigierte Gesamtlast des Fahrzeugs 2, 2', 2'', 2‴ und stellt diese digital bereit. Durch die Verwendung der korrigierten digitalen Kraftsensorsignale 102 für diese Bestimmung wird die Messgenauigkeit der Messung der überfahrenden Radlasten, Achslasten und Gesamtlast eines Fahrzeugs 2, 2', 2", 2‴ erhöht.

Der WIM Sensor 5 weist in einer Ausführungsform ein elektronisches Signalübertragungselement 15 auf; wobei in einer bevorzugten Ausführungsform an dem elektronischen Signalübertragungselement 15 ein Anschlusselement für einen Leiter angeordnet ist, wobei ein Leiter zur Übermittlung von im WIM Sensor bereitgestellten Signalen an eine externe Auswerteeinheit genutzt wird; wobei in einer bevorzugten Ausführungsform an dem Signalübertragungselement ein Sender und Empfänger für elektromagnetische Wellen angeordnet ist; wobei das Signalübertragungselement 15 im WIM Sensor 5 bereitgestellte Signale durch elektromagnetische Wellen an ein externes Auswerteelement 7 überträgt. Ein externes Auswerteelement 7 ist beispielsweise ein Laptop oder ein Personal Computer oder eine dezentrale IT-Infrastruktur.

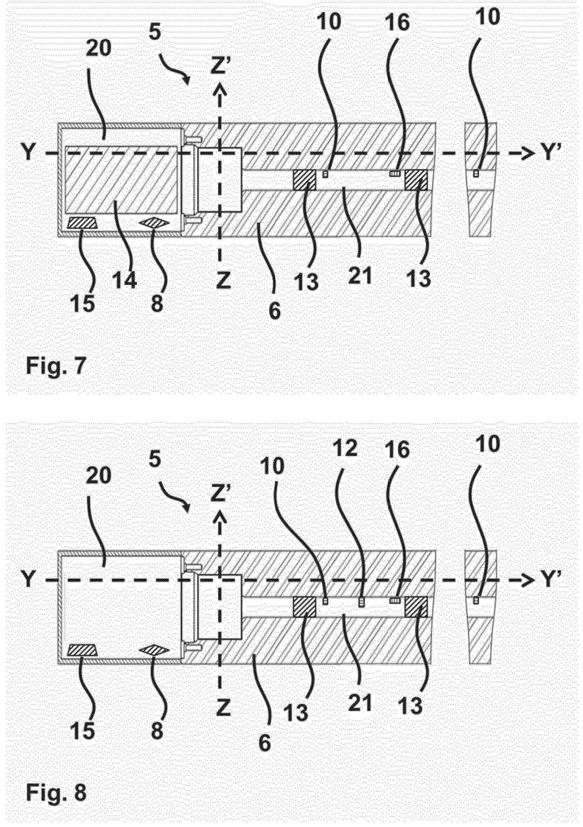

In einer weiteren Ausführungsform ist in mindestens einem Raum 20, 21 eine Energieversorgung 14 angeordnet, wie in Fig. 7 in einer bevorzugten Ausführungsform dargestellt; wobei die Energieversorgung 14 mindestens ein elektronisches Element des WIM Sensors 5 mit elektrischer Energie versorgt.

Die nicht abschliessende Liste elektronischer Elemente umfasst in bevorzugter Ausführungsform mindestens eines der folgenden Elemente: Kraftsensor 13, elektroakustischer Wandler 10, A/D Wandler 11, Signalübertragungselement 15, Temperatursonde 16.

Selbstverständlich können auch elektronische Elemente mit verschiedenen Aufgaben in Form eines einzigen elektronischen Bauteils vorliegen, wie zum Bespiel einer anwendungsspezifischen integrierten Schaltung, kurz ASIC. Es können auch mehrere elektronische Elemente mit gleichartigen Aufgaben in Form eines einzigen elektronischen Bauteiles vorliegen.

In einer Ausführungsform des WIM Sensors 5 ist die Energieversorgung 14 die einzige Quelle für elektrische Energie des WIM Sensors 5. In einer weiteren Ausführungsform ist die Energieversorgung 14 eine zusätzliche Quelle für elektrische Energie des WIM Sensors 5, beispielsweise eine unterbrechungsfreie Stromversorgung oder eine allgemeine Ersatzstromversorgung; wobei letztere im Falle eines Ausfalles der Netzspannung einen kurzen Unterbruch der Stromversorgung bedeutet bevor der Strom durch die Energieversorgung 14 automatisch einsetzt.

In vorteilhafter Ausführungsform versorgt die Energieversorgung 14 mindestens ein im Fahrbahnabschnitt 1 angeordnetes elektronisches Element mit elektrischer Energie.

Wird die Versorgung eines elektroinschen Elements mit elektrischer Energie beendet, so wird dies im Folgenden als ausschalten der Energieversorgung 14 für das elektronisches Element bezeichnet, auch wenn die Energieversorgung 14 weitere elektronische Elemente gleichbleibend mit elektrischer Energie versorgt. Analog wird im Folgenden die Wiederaufnahme der Versorgung des elektronischen Elements mit elektrischer Energie mit Einschalten der Energieversorgung 14 für das elektronisches Element bezeichnet. Auch wird im Folgenden die Reduzierung der Energieversorgung 14 eines elektronischen Elements mit elektrischer Energie mit Reduktion der Energieversorgung 14 für das elektronisches Element bezeichnet.

Der Algorithmus im Mikroprozessor 8 schaltet die Energieversorgung 14 mindestens eines im Fahrbahnabschnitt 1 angeordneten elektronischen Elements ein oder aus oder versetzt mindestens ein im Fahrbahnabschnitt 1 angeordnetes elektronisches Element aus einem Betriebsmodus in einen Niedrigenergiemodus, in welchem Niedrigenergiemodus sie elektronische Komponente einen verringerten Energiebedarf aufweist als im Betriebsmodus.

Die Energieversorgung 14 stellt elektrische Energie während einer Energieversorgungslaufzeit bereit, welche Energieversorgungslaufzeit endet, wenn die Energieversorgung 14 mehrheitlich entleert ist.

In vorteilhafter Ausführungsform erfolgt mittels der Präsenzinformation 121 eine Anpassung der Energieversorgung 14 einzelner elektronischer Elemente oder Gruppen elektronischer Elemente des WIM Sensors 5; wobei eine Anpassung insbesondere eine Reduzierung oder Abschaltung der Energieversorgung 14 ist, wodurch die Energieversorgungslaufzeit deutlich gesteigert wird. Durch den Algorithmus im Mikroprozessor 8 wird bei keiner erkannten Präsenz eines Rades 11 auf einem Fahrbahnabschnitt 1 die Energieversorgung 14 mindestens eines, im Fahrbahnabschnitt 1 angeordneten, elektronischen Elements abgeschaltet oder reduziert, welches elektronische Element nicht für eine Erfassung einer Präsenz eines Rades 11 auf dem Fahrbahnabschnitt 1 notwendig ist. Bei einer erkannten Präsenz eines Rades 11 auf dem Fahrbahnabschnitt 1 wird die abgeschaltete oder reduzierte Energieversorgung 14 wieder eingeschaltet. Durch Abschaltung oder Reduktion der Energieversorgung 14 wird die Energieversorgungslaufzeit der Energieversorgung 14 verlängert. In vorteilhafter Ausführungsform erfolgt das Schalten oder Reduzieren der Energieversorgung 14 für mindestens ein im Fahrbahnabschnitt 1 angeordnetes elektronisches Element durch den Algorithmus auf Grund der Präsenzinformation 121.

In bevorzugter Ausführungsform ermöglicht die Auswertung mindestens eines digitalen Wandlersignals 111 eine Ermittlung der aktuellen Lärmbelastung. Die Ermittlung der aktuellen Lärmbelastung geschieht durch den Algorithmus im Mikroprozessor 8 oder externen Auswerteelement 7, welcher Algorithmus den Schalldruckpegel eines digitalen Wandlersignals 111 bestimmt. Aus dem Schalldruckpegel wird die Schallemmission eines überfahrenden Fahrzeugs 2, 2', 2", 2‴ ermittelt. Die Schallemmission wird mit einem voreingestellten Grenzwert für eine Schallemmission verglichen. Das Ergebnis dieses Vergleichs wird als Lärmsignal bereitgestellt und durch ein Signalübertragungselement an ein externes Auswerteelement oder an einen Laptop oder an einen Personal Computer oder an eine dezentrale IT-Infrastruktur über das Internet übermittelt.

In einer weiteren Ausführungsform ist im Raum 20, 21 des Profils 6 mindestens ein akustischer Signalgenerator 12 angeordnet, wie in Fig. 8 gezeigt; welcher akustische Signalgenerator 12 akustische Signale mit Frequenzen im Ultraschallbereich zwischen 21 kHz und 1 GHz erzeugt; welcher akustische Signalgenerator 12 eine zusätzliche Quelle für Schallwellen ist, die zusätzlich zu den oben genannten, von einem Fahrzeug 2, 2' 2" 2‴ ausgehenden Quellen für Schallwellen existiert; welche Schallwellen sich in bekannter Weise ausbreiten und an Elementen eines Fahrzeugs 2, 2' 2" 2‴ reflektiert werden. Daher werden die Schallwellen ausgehend vom akustischen Signalgenerator 12 zusätzlich zu den von einem Fahrzeug 2, 2' 2" 2‴ erzeugten Schallwellen von mindestens einem elektroakustischen Wandler 10 erfasst, wobei die erfassten Schallwellen eines akustischen Signalgenerators 526, gleich den von einem Fahrzeug 2, 2' 2" 2‴ erzeugten Schallwellen, zur Präsenzbestimmung eines Fahrzeugs 2, 2' 2" 2‴ genutzt werden. Der akustische Signalgenerator 12 wird durch den Algorithmus im Mikroprozessor 511 angesteuert, wobei der Algorithmus die Frequenz, Dauer und Intensität der erzeugten Schallwellen regelt.

Bei Kenntnis der vorliegenden Erfindung kann der Fachmann mehrere WIM Sensoren 5 mit elektroakustischen Wandlern 10 beabstandet voneinander in eine Fahrbahn einbringen. Digitale Wandlersignale 111 und digitale Kraftsensorsignale 101 werden im externen Auswerteelement 7 erfasst; wobei die Erfassung der digitalen Wandlersignalen 111 und digitalen Kraftsensorsignale 101 mehrerer WIM Sensoren 5 eine Erhöhung der Messgenauigkeit erlaubt; wobei die Erfassung der digitalen Wandlersignalen 111 und digitalen Kraftsensorsignale 101 mehrerer WIM Sensoren 5 eine Prüfung der ermittelten Signale auf Konsistenz erlaubt.

In einer weiteren bevorzugten Ausführungsform des WIM Sensors 3 wird in einem konfigurierbaren Zeitabstand mindestens ein digitales Wandlersignal 111 zeitlich synchronisiert mit mindestens einem digitalen Kraftsensorsignal 101 und mit einem Zeitstempel 141 auf dem nicht flüchtigen Speicherelement 9 oder dem externen Auswerteelement 7 gespeichert, wobei ein Zeitstempel 141 aus einem Datum und einer Uhrzeit besteht und durch den Algorithmus im Mikroprozessor 8 bereitgestellt wird.

### Bezugszeichenliste

- 1: Fahrbahnabschnitt
- 2, 2', 2" , 2‴: Fahrzeug, Fahrzeug mit Anhänger, Fahrzeugkomposition
- 3: WIM Sensor
- 4, 4', 4", 4‴: Weitere externe Sensoren zur Präsenzerkennung eines Fahrzeugs
- 5: WIM Sensor in erster vorteilhafter Ausführungsform
- 6: Profil
- 7: externes Auswerteelement
- 8: Mikroprozessor
- 9: nicht flüchtiges Speicherelement
- 10: elektroakustischer Wandler
- 11: A/D-Wandler
- 12: Signalgenerator
- 13: Kraftsensor
- 14: Energieversorgung
- 15: Signalübertragungselement
- 16: Temperatursonde
- 20: Raum
- 21: Raum
- 100: Kraftsensorsignal
- 101: digitales Kraftsensorsignal
- 102: korrigiertes digitales Kraftsensorsignal
- 110: Wandlersignal
- 111: digitales Wandlersignal
- 121: Präsenzinformation
- 122: Fahrzeugpositionsinformation
- 123: Fahrzeugtrajektorieninformation
- 125: Phaseninformation
- 126: Lastinformation
- 130: Temperatursondensignal
- 131: digitales Temperatursondensignal
- P1: eine erste Position
- P2: eine zweite Position
- v1: eine erste Geschwindigkeit
- v2: eine zweite Geschwindigkeit
- v3: eine dritte Geschwindigkeit
- T: eine Trajektorie
- XX': Fahrtrichtung
- YY`: Längsachse
- ZZ': Höhenrichtung

## Patentansprüche

1. WIM Sensor (5) zur Ermittlung von Lasten von Fahrzeugen (2, 2', 2", 2‴) auf einem Fahrbahnabschnitt (1) bei der Überfahrt eines Rades eines Fahrzeugs (2, 2', 2", 2‴) über den WIM Sensor (5) ; welcher WIM Sensor (5) im Fahrbahnabschnitt (1) in der Fahrbahnoberfläche angeordnet ist und mit der Fahrbahnoberfläche eine Ebene bildet; welcher WIM Sensor (5) als ein entlang einer Längsachse (YY') lang ausgestaltetes Profil (6) mit mindestens einem Raum (20, 21) ausgeführt ist; **wobei** im Raum (20, 21) mindestens ein elektroakustischer Wandler (10) angeordnet ist der Schallwellen misst und als Wandlersignal (110) bereitstellt; wobei des Weiteren im Raum (20, 21) mindestens ein Kraftsensor (13) angeordnet ist der beim Wirken einer Kraft auf das Profil (6) ein Kraftsensorsignal (100) erzeugt; welches Kraftsensorsignal (100) einer dynamischen Bodenreaktionskraft bei Überfahrt des Rades entspricht, welches Rad eine Kraft auf den Fahrbahnabschnitt (1) ausübt.

2. WIM Sensor (5) nach Anspruch 1, **dadurch gekennzeichnet, dass** mindestens ein elektroakustischer Wandler (10) eine Sensitivität in einem bestimmten Frequenzband aufweist; und dass das Frequenzband Frequenzen in mindestens einem der folgenden Bereichen umfasst: im hörbaren Bereich von einschliesslich 20 Hz bis 21 kHz, im Ultraschallbereich von einschliesslich 21 kHz bis 1 GHz.

3. WIM Sensor (5) nach Anspruch 1 oder 2, **dadurch gekennzeichnet, dass** im Raum (20, 21) mindestens ein A/D-Wandler (11) angeordnet ist; dass der A/D-Wandler (11) das Wandlersignal (110) mindestens eines elektroakustischen Wandlers (11) in ein digitales Wandlersignal (111) wandelt und das digitale Wandlersignal (111) bereitstellt; und dass im Raum (20, 21) des Profils (6) mindestens ein A/D-Wandler (11) angeordnet ist; welcher A/D-Wandler (11) das Kraftsensorsignal (100) in ein digitales Kraftsensorsignal (101) wandelt und bereitstellt.

4. WIM Sensor (5), nach Anspruch 3, **dadurch gekennzeichnet, dass** im Raum (20, 21) mindestens ein Mikroprozessor (8) angeordnet ist; dass im Raum (20, 21) mindestens ein nicht flüchtiges Speicherelement (9) angeordnet ist; dass der Mikroprozessor (8) mindestens ein digitales Wandlersignal (111) zeitlich synchronisiert mit mindestens einem digitalen Kraftsensorsignal (101) erfasst; dass auf dem nicht flüchtigem Speicherelement (9) mindestens ein Algorithmus gespeichert ist; dass der Mikroprozessor (8) den Algorithmus aus dem nicht flüchtigem Speicherelement (9) lädt; dass der Mikroprozessor (8) das erfasste digitale Wandlersignal (111) mit dem Algorithmus auswertet; dass der Mikroprozessor (8) das erfasste digitale Kraftsensorsignal (101) mit dem Algorithmus auswertet; und dass der Mikroprozessor (8) die Auswertung bereitstellt.

5. WIM Sensor (5) nach Anspruch 4, **dadurch gekennzeichnet, dass** das nicht flüchtige Speicherelement (9) oder das externe Auswerteelement (7) in einem konfigurierbaren Zeitabstand mindestens ein digitales Wandlersignal (111) zeitlich synchronisiert mit mindestens einem digitalen Kraftsensorsignal (101) und mit einem Zeitstempel (141) speichert, wobei der Zeitstempel (141) aus einem Datum und einer Uhrzeit besteht.

6. WIM Sensor (5) nach Anspruch 5, **dadurch gekennzeichnet, dass** an dem Profil (6) mindestens ein Signalübertragungselement (15) angeordnet ist; wobei das Signalübertragungselement (15) mindestens ein digitales Kraftsensorsignal (101) an ein externes Auswerteelement (7) überträgt; wobei die Übertragung mittels mindestens eines elektrischen Leiters oder mittels elektromagnetischer Wellen erfolgt.

7. WIM Sensor (5) nach einem der Ansprüche 4 bis 6, **dadurch gekennzeichnet, dass** im Raum (20, 21) eine Energieversorgung (14) angeordnet ist; dass die Energieversorgung (14) mindestens ein im Fahrbahnabschnitt angeordnetes elektronisches Element mit elektrischer Energie versorgt; dass der Algorithmus im Mikroprozessor (8) die Energieversorgung (14) mindestens ein im Fahrbahnabschnitt (1) angeordnetes elektronisches Elements einschaltet oder ausschaltet; dass die Energieversorgung (14) elektrische Energie während einer Energieversorgungslaufzeit bereitstellt, welche Energieversorgungslaufzeit endet, wenn die Energieversorgung (14) mehrheitlich entleert ist; und dass das Ausschalten des elektronischen Elements die Energieversorgungslaufzeit verlängert.

8. WIM Sensor (5) nach Anspruch 7, **dadurch gekennzeichnet, dass** der Algorithmus die Energieversorgung (14) mindestens eines elektronischen Elements reduziert und das elektronische Element so aus einem Betriebsmodus in einen Niedrigenergiemodus versetzt, in welchem Niedrigenergiemodus das elektronische Element einen verringerten Energiebedarf aufweist als im Betriebsmodus; und dass das Reduzieren der Energieversorgung (14) des elektronischen Elements die Energieversorgungslaufzeit verlängert.

9. WIM Sensor (5) nach einem der Ansprüche 4 bis 8, **dadurch gekennzeichnet, dass** im Raum (20, 21) mindestens ein elektroakustischer Signalgenerator (12) angeordnet ist; dass der elektroakustische Signalgenerator (12) Schallwellen mit einer Frequenz im Frequenzband von 21 kHz bis 1 GHz erzeugt; dass der Algorithmus im Mikroprozessor die Frequenz, Dauer und Intensität der Schallwellen regelt; und dass die Schallwellen sich in bekannter Weise ausbreiten und ein elektroakustischer Wandlern (10) die Schallwellen zusätzlich zu den von einem Fahrzeug (2, 2', 2", 2‴) erzeugten Schallwellen als Wandlersignal (110) erfasst.

10. Verfahren zur Ermittlung einer Präsenz von Fahrzeugen (2, 2', 2", 2‴) auf einem Fahrbahnabschnitt (1) mit einem WIM Sensor (5) nach einem der Ansprüche 4 bis 9 **dadurch gekennzeichnet, dass** der Algorithmus das digitale Wandlersignal (111) mit mindestens einer charakteristischen Signatur für eine Präsenz eines Fahrzeugs (2, 2', 2", 2‴) über dem WIM Sensor (5) vergleicht, welche charakteristische Signatur mindestens eine bekannte vorgängig definierten Signalhöhe in mindestens einem vorgängig definierten Frequenzbereich des digitalen Wandlersignals (111) ist; dass der Algorithmus bei einer gefundenen charakteristischen Signatur eine positive Präsenzinformation (121) bildet, welche positive Präsenzinformation (121) eine Präsenz eines Fahrzeugs (2, 2', 2", 2‴) auf dem Fahrbahnabschnitt (1) anzeigt.

11. Verfahren nach Anspruch 10, mit mindestens dreien im Raum (20, 21) angeordneten elektroakustischen Wandlern (10), **dadurch gekennzeichnet, dass** der Algorithmus die digitalen Wandlersignale (111) anhand Ihrer Form vergleicht und aus dem zeitlichen Versatz zweier erkannter Formen zweier digitaler Wandlersignale (111) die zeitliche Differenz der Ankunftszeit der beiden erfassten digitalen Wandlersignale(111) bildet; dass der Algorithmus die zeitliche Differenz in der Ankunftszeit dreier Wandlersignale (111) verschiedener elektroakustischer Wandler (10) bildet und als Phaseninformation (125) bereitstellt; dass der Algorithmus aus der Phaseninformation (125) die Position eines Fahrzeugs (2, 2 `, 2", 2‴) auf dem Strassenabschnitt errechnet; und dass der Algorithmus die errechnete Position des Fahrzeugs (2, 2', 2", 2‴) als Fahrzeugpositionsinformation (122) bereitstellt.

12. Verfahren nach Anspruch 11, **dadurch gekennzeichnet, dass** der Algorithmus aus einer zeitlichen Abfolge der Fahrzeugpositionsinformation (122) eine Trajektorie (T) des Fahrzeugs (2, 2', 2", 2‴) in der Umgebung des WIM Sensors (5) erzeugt, welche Trajektorie (T) eine von der Zeit abhängige mathematische Bahnkurve in einem dreidimensionalen Koordinatensystem ist; und dass der Algorithmus die erzeugte Trajektorie (T) des Fahrzeugs (2, 2', 2", 2‴) als Fahrzeugtrajektorieninformation (123) bereitgestellt.

13. Verfahren nach Anspruch 12, **dadurch gekennzeichnet, dass** der Algorithmus ein korrigiertes digitales Kraftsensorsignal (102) aus der Fahrzeugtrajektorieninformation (123) und dem digitalen Kraftsensorsignal (101) bildet; dass der Algorithmus die erste Ableitung der Trajektorie (T) nach der Zeit bildet, welche die Geschwindigkeit des Fahrzeugs (2, 2', 2", 2‴) in der Umgebung des WIM Sensors (5) ist; dass der Algorithmus die zweite Ableitung der Trajektorie (T) nach der Zeit bildet, welche die Beschleunigung oder Radialbeschleunigung des Fahrzeugs (2, 2', 2 ", 2‴) in der Umgebung des WIM Sensors (5) ist, welche Beschleunigung beim Abbremsen oder Erhöhen der Geschwindigkeit des Fahrzeugs (2, 2', 2 ", 2‴) auftritt, welche Radialbeschleunigung beim Fahren einer Kurve des Fahrzeugs (2, 2', 2", 2‴) auftritt; dass der Algorithmus aus der Fahrzeugtrajektorieninformation (123) die Beschleunigung oder Radialbeschleunigung des Fahrzeugs (2, 2', 2", 2‴) an der Position des Kraftsensors (13) berechnet; dass der Algorithmus aus der durch das digitale Kraftsensorsignal (101) ermittelten Kraft, welche ein Rad auf den Kraftsensor (13) ausübt, und der Beschleunigung oder Radialbeschleunigung den Anteil der Kraft, kurz Kraftkomponente, berechnet, der durch die Beschleunigung oder Radialbeschleunigung des Fahrzeugs (2, 2', 2", 2‴) gegeben ist; dass der Algorithmus die Differenz aus dieser Kraftkomponente und dem ermittelten digitalen Kraftsensorsignal (101) bildet; dass der Algorithmus aus dieser Differenz das korrigierte digitale Kraftsensorsignal (102) erzeugt, wodurch das korrigierte digitale Kraftsensorsignal (102) unabhängig von der durch die Beschleunigung oder Radialbeschleunigung des Fahrzeugs (2, 2', 2", 2‴) auf den Fahrbahnabschnitt (1) ausgeübten Kraft ist.

14. Verfahren nach Anspruch 12, **dadurch gekennzeichnet, dass** der Algorithmus ein korrigiertes digitales Kraftsensorsignal (102) aus der Fahrzeugtrajektorieninformation (123) und dem digitalen Temperatursondensignal (131) und dem digitalen Kraftsensorsignal (101) bildet; dass der Algorithmus die erste Ableitung der Trajektorie (T) nach der Zeit bildet, welche die Geschwindigkeit des Fahrzeugs (2, 2', 2", 2‴) in der Umgebung des WIM Sensors (5) ist; dass der Algorithmus die zweite Ableitung der Trajektorie (T) nach der Zeit bildet, welche die Beschleunigung oder Radialbeschleunigung des Fahrzeugs (2, 2', 2 ", 2‴) in der Umgebung des WIM Sensors (5) ist, welche Beschleunigung beim Abbremsen oder erhöhen der Geschwindigkeit des Fahrzeugs (2, 2', 2", 2‴) auftritt, welche Radialbeschleunigung beim Fahren einer Kurve des Fahrzeugs (2, 2', 2", 2‴) auftritt; dass der Algorithmus aus der Fahrzeugtrajektorieninformation (123) die Beschleunigung oder Radialbeschleunigung des Fahrzeugs (2, 2', 2", 2‴) an der Position des Kraftsensors (13) berechnet; dass der Algorithmus das digitale Kraftsensorsignal (101) auf Grund der vorgängig bekannten Temperaturabhängigkeit des Kraftsensors (13) korrigiert bevor der Algorithmus aus der durch das digitale Kraftsensorsignal (101) ermittelten Kraft, welche ein Rad auf den Kraftsensor (13) ausübt, die Kraftkomponente berechnet, welche durch die Beschleunigung oder Radialbeschleunigung des Fahrzeugs (2, 2 `, 2", 2‴) gegeben ist; dass der Algorithmus die Differenz dieser Kraftkomponente und dem auf Grund der vorgängig bekannten Temperaturabhängigkeit des Kraftsensors (13) korrigierten, digitalen Kraftsensorsignal (101) bildet; dass der Algorithmus daraus das korrigierte digitale Kraftsensorsignal (102) erzeugt; und dass das korrigierte digitale Kraftsensorsignal (102) dadurch unabhängig von der durch die Beschleunigung des Fahrzeugs (2, 2', 2", 2‴) auf den Fahrbahnabschnitt ausgeübten Kraft und der Temperatur des Kraftsensors (13) ist.

15. Verfahren nach einem der Ansprüche 12 bis 14, **dadurch gekennzeichnet, dass** der Algorithmus eine Summe der Radlasten der Räder eines Fahrzeugs (2, 2 `2 "2, 2‴) mittels der korrigierten digitalen Kraftsensorsignale (102) und der Fahrzeugtrajektorieninformation (123) bildet; dass der Algorithmus mit dieser Summe die Gesamtlast des Fahrzeugs (2, 2', 2", 2‴) errechnet und als Lastinformation (126) bereitgestellt; wobei der Algorithmus die zu einem Fahrzeug zugehörigen Räder durch die Fahrzeugtrajektorieninformation (123) bestimmt; wodurch der Algorithmus die Messgenauigkeit der Gesamtlast eines Fahrzeugs (2, 2', 2", 2‴) gegenüber einem WIM Sensor (5) ohne bereitgestellte Fahrzeugtrajektorieninformation (123) erhöht.

## Claims

1. A WIM sensor (5) for detecting loads of vehicles (2, 2', 2", 2‴) on a roadway segment (1) when a wheel of a vehicle (2, 2', 2", 2‴) crosses the WIM sensor (5); which WIM sensor (5) is arranged in the roadway segment (1) in the roadway surface and is inserted flush with the roadway surface; which WIM sensor (5) has the form of an elongated profile (6) along a longitudinal axis (YY`) and comprises at least one space (20, 21); **wherein** at least one electro-acoustic transducer (10) is arranged in the space (20, 21) which measures sound waves and provides them as the transducer signal (110); wherein furthermore in the space (20, 21) is arranged at least one force sensor (13) which generates a force sensor signal (100) when a force acts on the profile (6); which force sensor signal (100) corresponds to a dynamic ground reaction force when the wheel crosses the sensor, which wheel exerts a force onto the roadway segment (1).

2. The WIM sensor (5) according to claim 1, **characterized in that** at least one electro-acoustic transducer (10) has a sensitivity in a specific frequency band; and **in that** the frequency band comprises frequencies in at least one of the following ranges: in the audible range from 20 Hz to 21 kHz, limits included, in the ultrasound range from 21 kHz to 1 GHz, limits included.

3. The WIM sensor (5) according to claim 1 or claim 2, **characterized in that** at least one A/D converter (11) is arranged in the space (20, 21); the A/D converter (11) converts the transducer signal (110) of at least one electro-acoustic transducer (11) into a digital transducer signal (111) and provides the digital transducer signal (111); and **in that** at least one A/D converter (11) is arranged in the space (20, 21) of the profile (6); which A/D converter (11) converts the force sensor signal (100) into a digital force sensor signal (101) which it provides.

4. The WIM sensor (5), according to claim 3, **characterized in that** at least one microprocessor (8) is arranged in the space (20, 21); at least one non-volatile memory member (9) is arranged in the space (20, 21); the microprocessor (8) detects at least one digital transducer signal (111) in a temporally synchronized manner with at least one digital force sensor signal (101); at least one algorithm is stored on the non-volatile memory member (9); the microprocessor (8) loads the algorithm from the non-volatile memory member (9); the microprocessor (8) evaluates the detected digital transducer signal (111) by means of the algorithm; the microprocessor (8) evaluates the detected digital force sensor signal (101) by means of the algorithm; and **in that** the microprocessor (8) provides the evaluation.

5. The WIM sensor (5) according to claim 4, **characterized in that** the non-volatile memory member (9) or the external evaluation member (7) stores at a configurable time interval at least one digital transducer signal (111) in a temporally synchronized manner with at least one digital force sensor signal (101) and with a time stamp (141) wherein the time stamp (141) consists of a date and a time.

6. The WIM sensor (5) according to claim 5, **characterized in that** at least one signal transmission member (15) is arranged at the profile (6); wherein the signal transmission member (15) transmits at least one digital force sensor signal (101) to an external evaluation member (7); wherein said transmission occurs by means of at least one electrical conductor or by means of electromagnetic waves.

7. The WIM sensor (5) according to any of the claims 4 to 6, **characterized in that** a power supply (14) is arranged in the space (20, 21); the power supply (14) supplies electrical power to at least one electronic member arranged in the roadway segment; the algorithm in the microprocessor (8) switches on or off the power supply (14) to at least one electronic member arranged in the roadway segment (1); the power supply (14) provides electrical power during a power supply runtime which power supply runtime ends when the power supply (14) is largely discharge; and **in that** switching off the electronic member extends the power supply runtime.

8. The WIM sensor (5) according to claim 7, **characterized in that** the algorithm reduces the power supply (14) to at least one electronic member and thus switches the electronic member from an operating mode to a low-power mode in which low-power mode the power requirement of the electronic member is reduced compared to the operating mode; and **in that** reducing the power supply (14) to the electronic member extends the power supply runtime.

9. The WIM sensor (5) according to any of the claims 4 to 8, **characterized in that** at least one electro-acoustic signal generator (12) is arranged in the space (20, 21); the electro-acoustic signal generator (12) generates sound waves with a frequency in the frequency band from 21 kHz to 1 GHz; the algorithm in the microprocessor controls the frequency, duration and intensity of the sound waves; and **in that** the sound waves propagate in a well-known manner and an electro-acoustic transducer (10) detects the sound waves in addition to the sound waves generated by a vehicle (2, 2', 2", 2‴) as the transducer signal (110).

10. A method for detecting a presence of vehicles (2, 2', 2", 2‴) on a roadway segment (1) with a WIM sensor (5) according to any of the claims 4 to 9, **characterized in that** the algorithm compares the digital transducer signal (111) to at least one characteristic signature for the presence of a vehicle (2, 2', 2", 2‴) passing over the WIM sensor (5) said characteristic signature being at least one known predefined signal level in at least one predefined frequency range of the digital transducer signal (111); and **in that** if it finds a characteristic signature the algorithm generates positive presence information (121) which positive presence information (121) indicates a presence of a vehicle (2, 2', 2", 2‴) on the roadway segment (1).

11. The method according to claim 10 with at least three electro-acoustic transducers (10) arranged in the space (20, 21), **characterized in that** the algorithm compares the digital transducer signals (111) on the basis of their shape and from the temporal offset of two recognized shapes of two digital transducer signals (111) calculates the time difference in the arrival time of the two detected digital transducer signals (111); the algorithm calculates the time difference in the arrival time of three transducer signals (111) from different electro-acoustic transducers (10) which it provides as the phase information (125); the algorithm uses the phase information (125) for calculating the position of a vehicle (2, 2', 2", 2‴) on the roadway segment; and **in that** the algorithm provides the calculated position of the vehicle (2, 2', 2", 2‴) as the vehicle position information (122).

12. The method according to claim 11, **characterized in that** from a time sequence of vehicle position information (122) the algorithm calculates a trajectory (T) of the vehicle (2, 2', 2", 2‴) in the vicinity of the WIM sensor (5) which trajectory (T) is a time-dependent mathematical trajectory in a three-dimensional coordinate system; and **in that** the algorithm provides the calculated trajectory (T) of the vehicle (2, 2', 2", 2‴) as the vehicle trajectory information (123).

13. The method according to claim 12, **characterized in that** the algorithm calculates a corrected digital force sensor signal (102) from the vehicle trajectory information (123) and the digital force sensor signal (101); the algorithm calculates the first derivative of the trajectory (T) with respect to time which is the speed of the vehicle (2, 2 `, 2'', 2‴) in the vicinity of the WIM sensor (5); the algorithm calculates the second derivative of the trajectory (T) with respect to time which is the acceleration or radial acceleration of the vehicle (2, 2', 2'', 2 ` ` `) in the vicinity of the WIM sensor (5) wherein said acceleration occurs when the vehicle (2, 2 `, 2", 2‴) brakes or increases its speed, wherein said radial acceleration occurs when the vehicle (2, 2', 2", 2‴) drives through a bend; the algorithm uses the vehicle trajectory information (123) to calculate the acceleration or radial acceleration of the vehicle (2, 2', 2", 2‴) at the position of the force sensor (13); from the force that a wheel exerts on the force sensor (13) detected by the digital force sensor signal (101) and the acceleration or radial acceleration the algorithm calculates the fraction of the force or shortly the force component caused by the acceleration or radial acceleration of the vehicle (2, 2', 2", 2‴) ; the algorithm calculates the difference between this force component and the determined digital force sensor signal (101); and from this difference the algorithm generates the corrected digital force sensor signal (102) whereby the corrected digital force sensor signal (102) is independent of the force exerted on the roadway segment (1) by the acceleration or radial acceleration of the vehicle (2, 2', 2", 2‴).

14. The method according to claim 12, **characterized in that** the algorithm calculates a corrected digital force sensor signal (102) from the vehicle trajectory information (123) and the digital temperature probe signal (131) and the digital force sensor signal (101); the algorithm calculates the first derivative of the trajectory (T) with respect to time which is the speed of the vehicle (2, 2', 2'', 2‴) in the vicinity of the WIM sensor (5); the algorithm calculates the second derivative of the trajectory (T) with respect to time which is the acceleration or radial acceleration of the vehicle (2, 2', 2", 2‴) in the vicinity of the WIM sensor (5) wherein said acceleration occurs when the vehicle (2, 2', 2", 2‴) brakes or increases its speed, wherein said radial acceleration occurs when the vehicle (2, 2', 2", 2‴) drives through a bend; the algorithm uses the vehicle trajectory information (123) to calculate the acceleration or radial acceleration of the vehicle (2, 2', 2", 2‴) at the position of the force sensor (13); the algorithm corrects the digital force sensor signal (101) on the basis of the predetermined temperature dependency of the force sensor (13) whereafter the algorithm uses the force that a wheel exerts onto the force sensor (13) determined by the digital force sensor signal (101) to calculate the force component which is caused by the acceleration or radial acceleration of the vehicle (2, 2', 2", 2‴) ; the algorithm calculates the difference between this force component and the digital force sensor signal (101) corrected on the basis of the predetermined temperature dependency of the force sensor (13); from this the algorithm generates the corrected digital force sensor signal (102); and **in that** the corrected digital force sensor signal (102) is therefore independent of the force exerted onto the roadway segment by the acceleration of the vehicle (2, 2', 2", 2‴) and of the temperature of the force sensor (13).

15. The method according to any of the claims 12 to 14, **characterized in that** the algorithm calculates a sum of the wheel loads of the wheels of a vehicle (2, 2'2"2, 2‴) using the corrected digital force sensor signals (102) and generates the vehicle trajectory information (123); the algorithm uses this sum to calculate the total load of the vehicle (2, 2", 2‴, 2ʺʺ) which it provides as the load information (126); wherein the algorithm determines the wheels belonging to a vehicle from the vehicle trajectory information (123); whereby the algorithm increases the measurement accuracy of the total load of a vehicle (2, 2', 2", 2 ` ` `) as compared to a WIM sensor (5) without vehicle trajectory information (123) provided.

## Revendications

1. Capteur WIM (5) pour détecter des charges de véhicules (2, 2', 2'', 2''') sur un segment de route (1) lorsqu'une roue d'un véhicule (2, 2', 2'', 2''') traverse ledit capteur WIM (5) ; ledit capteur WIM (5) étant agencé dans ledit segment de route (1) dans la surface de la route et posé à fleur de la surface de la route ; lequel capteur WIM (5) a la forme d'un profilé (6) allongé le long d'un axe longitudinal (YY') et comprend au moins un espace (20, 21) ; **dans lequel** au moins un transducteur électro-acoustique (10) est disposé dans l'espace (20, 21) qui mesure les ondes sonores et les fournit comme signal de transducteur (110); dans lequel, en outre, au moins un capteur de force (13) est disposé dans ledit espace (20, 21) qui génère un signal de capteur de force (100) lorsqu'une force agit sur ledit profilé (6); lequel signal de capteur de force (100) correspond à une force de réaction dynamique du sol lorsque la roue traverse le capteur, laquelle roue exerce une force sur ledit segment de route (1).

2. Capteur WIM (5) selon la revendication 1, **caractérisé en ce qu'**au moins un transducteur électro-acoustique (10) a une sensibilité dans une bande de fréquence spécifique ; et **en ce que** la bande de fréquence comprend des fréquences dans au moins une des plages suivantes : dans la plage audible de 20 Hz à 21 kHz, limites incluses, dans la plage ultrasonore de 21 kHz à 1 GHz, limites incluses.

3. Capteur WIM (5) selon la revendication 1 ou 2, **caractérisé en ce que** au moins un convertisseur A/N (11) est disposé dans l'espace (20, 21) ; **en ce que** le convertisseur A/N (11) convertit le signal de transducteur (110) d'au moins un transducteur électro-acoustique (11) en un signal de transducteur numérique (111) et fournit le signal de transducteur numérique (111) ; et **en ce qu'**au moins un convertisseur A/N (11) est disposé dans l'espace (20, 21) du profilé (6) ; lequel convertisseur A/N (11) convertit le signal de capteur de force (100) en un signal de capteur de force numérique (101) qu'il fournit.

4. Capteur WIM (5) selon la revendication 3, **caractérisé en ce que** au moins un microprocesseur (8) est disposé dans l'espace (20, 21) ; **en ce qu'**au moins un élément de mémoire non volatile (9) est disposé dans l'espace (20, 21) ; **en ce que** le microprocesseur (8) détecte au moins un signal de transducteur numérique (111) de manière synchronisée dans le temps avec au moins un signal de capteur de force numérique (101) ; **en ce qu'**au moins un algorithme est stocké sur l'élément de mémoire non volatile (9) ; **en ce que** le microprocesseur (8) charge l'algorithme à partir de l'élément de mémoire non volatile (9) ; **en ce que** le microprocesseur (8) évalue le signal de transducteur numérique (111) détecté au moyen de l'algorithme ; **en ce que** le microprocesseur (8) évalue le signal de capteur de force numérique (101) détecté au moyen de l'algorithme ; et **en ce que** le microprocesseur (8) fournit l'évaluation.

5. Capteur WIM (5) selon la revendication 4, **caractérisé en ce que** l'élément de mémoire non volatile (9) ou l'élément d'évaluation externe (7) stocke, à un intervalle de temps configurable, au moins un signal de transducteur numérique (111) de manière synchronisée dans le temps avec au moins un signal de capteur de force numérique (101) et avec un horodatage (141), dans lequel l'horodatage (141) consiste en une date et une heure.

6. Capteur WIM (5) selon la revendication 5, **caractérisé en ce que** au moins un élément de transmission de signaux (15) est disposé sur le profilé (6), dans lequel ledit élément de transmission de signaux (15) transmet au moins un signal de capteur de force numérique (101) à un élément d'évaluation externe (7), dans lequel ladite transmission s'effectue au moyen d'au moins un conducteur électrique ou au moyen d'ondes électromagnétiques.

7. Capteur WIM (5) selon l'une quelconque des revendications 4 à 6, **caractérisé en ce que** une alimentation électrique (14) est disposée dans l'espace (20, 21) ; **en ce que** l'alimentation électrique (14) fournit de l'énergie électrique à au moins un élément électronique disposé dans le segment de route ; **en ce que** l'algorithme stocké dans le microprocesseur (8) active ou désactive l'alimentation électrique (14) d'au moins un élément électronique disposé dans le segment de route (1) ; **en ce que** l'alimentation électrique (14) fournit de l'énergie électrique pendant une durée de fonctionnement de l'alimentation électrique, laquelle durée de fonctionnement de l'alimentation électrique se termine lorsque l'alimentation électrique (14) est largement déchargée ; et **en ce que** la désactivation de l'élément électronique prolonge la durée de fonctionnement de l'alimentation électrique.

8. Capteur WIM (5) selon la revendication 7, **caractérisé en ce que** l'algorithme réduit l'alimentation électrique (14) d'au moins un élément électronique et commute ainsi l'élément électronique d'un mode de fonctionnement à un mode de faible puissance, mode de faible puissance dans lequel le besoin en énergie de l'élément électronique est réduite par rapport au mode de fonctionnement ; et **en ce que** la réduction de l'alimentation électrique (14) de l'élément électronique prolonge la durée de fonctionnement de l'alimentation électrique.

9. Capteur WIM (5) selon l'une quelconque des revendications 4 à 8, **caractérisé en ce que** au moins un générateur de signal électro-acoustique (12) est disposé dans l'espace (20, 21) ; **en ce que** le générateur de signal électro-acoustique (12) génère des ondes sonores avec une fréquence dans la bande de fréquences de 21 kHz à 1 GHz ; **en ce que** l'algorithme stocké dans le microprocesseur commande la fréquence, la durée et l'intensité des ondes sonores ; et **en ce que** les ondes sonores se propagent d'une manière bien connue et un transducteur électro-acoustique (10) détecte les ondes sonores en plus des ondes sonores générées par un véhicule (2, 2', 2", 2‴) comme signal de transducteur (110) .

10. Procédé pour détecter la présence de véhicules (2, 2', 2", 2‴) sur un segment de route (1) en utilisant un capteur WIM (5) selon l'une quelconque des revendications 4 à 9, **caractérisé en ce que** l'algorithme compare le signal de transducteur numérique (111) à au moins une signature caractéristique de la présence d'un véhicule (2, 2', 2'', 2‴) traversant le capteur WIM (5), ladite signature caractéristique étant au moins un niveau de signal prédéfini connu dans au moins une gamme de fréquences du signal de transducteur numérique (111) prédéfinie ; et **en ce que**, s'il trouve une signature caractéristique, l'algorithme génère une information de présence positive (121), laquelle information de présence positive (121) indique la présence d'un véhicule (2, 2', 2'', 2''') sur le segment de route (1).

11. Procédé selon la revendication 10 utilisant au moins trois transducteurs électro-acoustiques (10) disposés dans l'espace (20, 21), **caractérisé en ce que** l'algorithme compare les signaux de transducteur numériques (111) sur la base de leur forme et calcule, à partir du décalage temporel de deux formes reconnues de deux signaux de transducteur numériques (111), la différence temporelle du temps d'arrivée entre les deux signaux de transducteur numériques (111) détectés ; **en ce que** l'algorithme calcule la différence temporelle du temps d'arrivée entre trois signaux de transducteur (111) provenant de différents transducteurs électro-acoustiques (10) qu'il fournit comme information de phase (125) ; **en ce que** l'algorithme utilise l'information de phase (125) pour calculer la position d'un véhicule (2, 2', 2'', 2''') sur le segment de route ; et **en ce que** l'algorithme fournit la position calculée du véhicule (2, 2', 2'', 2' ' ') comme information de position de véhicule (122).

12. Procédé selon la revendication 11, **caractérisé en ce que,** à partir d'une séquence temporelle d'informations de position de véhicule (122), l'algorithme calcule une trajectoire (T) du véhicule (2, 2', 2'', 2''') à proximité du capteur WIM (5), laquelle trajectoire (T) est une trajectoire mathématique dépendant du temps dans un système de coordonnées tridimensionnel ; et **en ce que** l'algorithme fournit la trajectoire (T) du véhicule (2, 2', 2ʺ, 2‴) calculée comme information de trajectoire de véhicule (123) .

13. Procédé selon la revendication 12, **caractérisé en ce que** l'algorithme calcule un signal de capteur de force numérique corrigé (102) à partir des informations de trajectoire de véhicule (123) et du signal de capteur de force numérique (101) ; **en ce que** l'algorithme calcule la première dérivée de la trajectoire (T) par rapport au temps qui est la vitesse du véhicule (2, 2', 2", 2‴) à proximité du capteur WIM (5) ; **en ce que** l'algorithme calcule la seconde dérivée de la trajectoire (T) par rapport au temps qui est l'accélération ou l'accélération radiale du véhicule (2, 2', 2'', 2''') à proximité du capteur WIM (5), dans lequel ladite accélération se produit lorsque le véhicule (2, 2', 2'', 2" '') freine ou augmente sa vitesse, dans lequel ladite accélération radiale se produit lorsque le véhicule (2, 2', 2'', 2''') passe dans un virage ; **en ce que** l'algorithme utilise les informations de trajectoire de véhicule (123) pour calculer l'accélération ou l'accélération radiale du véhicule (2, 2', 2", 2‴) à la position du capteur de force (13) ; **en ce que** l'algorithme calcule, à partir de la force qu'une roue exerce sur le capteur de force (13) détectée par le signal de capteur de force numérique (101) et de l'accélération ou de l'accélération radiale, la fraction de la force, brièvement nommée composante de force, causée par l'accélération ou l'accélération radiale du véhicule (2, 2', 2", 2‴) ; **en ce que** l'algorithme calcule la différence entre cette composante de force et le signal de capteur de force numérique (101) déterminé ; et **en ce que** l'algorithme génère, à partir de cette différence, le signal de capteur de force numérique corrigé (102) ce qui permet d'obtenir le signal de capteur de force numérique corrigé (102) indépendant de la force exercée sur le segment de route (1) par l'accélération ou l'accélération radiale du véhicule (2, 2', 2", 2‴).

14. Procédé selon la revendication 12, **caractérisé en ce que** l'algorithme calcule un signal de capteur de force numérique corrigé (102) à partir des informations de trajectoire de véhicule (123) et du signal de sonde de température numérique (131) et du signal de capteur de force numérique (101) ; **en ce que** l'algorithme calcule la première dérivée de la trajectoire (T) par rapport au temps qui est la vitesse du véhicule (2, 2', 2", 2‴) à proximité du capteur WIM (5) ; **en ce que** l'algorithme calcule la seconde dérivée de la trajectoire (T) par rapport au temps qui est l'accélération ou l'accélération radiale du véhicule (2, 2', 2", 2‴) à proximité du capteur WIM (5), dans lequel ladite accélération se produit lorsque le véhicule (2, 2', 2ʺ, 2‴) freine ou augmente sa vitesse, dans lequel ladite accélération radiale se produit lorsque le véhicule (2, 2', 2", 2‴) passe dans un virage ; **en ce que** l'algorithme utilise les informations de trajectoire de véhicule (123) pour calculer l'accélération ou l'accélération radiale du véhicule (2, 2', 2'', 2‴) à la position du capteur de force (13) ; **en ce que** l'algorithme corrige le signal de capteur de force numérique (101) sur la base de la dépendance de température du capteur de force (13) prédéterminée, puis l'algorithme utilise la force qu'une roue exerce sur le capteur de force (13) déterminée par le signal de capteur de force numérique (101) pour calculer la composante de force qui est causée par l'accélération ou l'accélération radiale du véhicule (2, 2', 2", 2‴) ; **en ce que** l'algorithme calcule la différence entre cette composante de force et le signal de capteur de force numérique (101) corrigé sur la base de la dépendance de température du capteur de force (13) prédéterminée; **en ce que** l'algorithme génère, à partir de celle-ci, le signal de capteur de force numérique corrigé (102); et **en ce que** le signal de capteur de force numérique corrigé (102) est donc indépendant de la force exercée sur le segment de route par l'accélération du véhicule (2, 2', 2'', 2''') et de la température du capteur de force (13).

15. Procédé selon l'une quelconque des revendications 12 à 14, **caractérisé en ce que** l'algorithme calcule une somme des charges des roues d'un véhicule (2, 2', 2", 2‴) en utilisant les signaux de capteur de force numériques corrigés (102) et génère les informations de trajectoire de véhicule (123) ; **en ce que** l'algorithme utilise cette somme pour calculer la charge totale du véhicule (2, 2'', 2‴, 2'''') qu'il fournit comme informations de charge (126) ; dans lequel l'algorithme détermine les roues appartenant à un véhicule à partir des informations de trajectoire de véhicule (123) de sorte que l'algorithme augmente la précision de mesure de la charge totale d'un véhicule (2, 2', 2'', 2‴) par rapport à un capteur WIM (5) sans fourniture d'informations sur la trajectoire de véhicule (123) .
